# EUROPEAN PATENT SPECIFICATION

(11) **EP 4 568 164 B1**
(45) Date of publication and mention of the grant of the patent: **24.06.2026**
(21) Application number: 23214547.4
(22) Date of filing: 06.12.2023
(51) Int. Cl.: H04L 9/00

(54) **BLOCKCHAIN TRANSACTION CLEAN-UP SERVICE**
BLOCKCHAIN-TRANSAKTIONSREINIGUNGSDIENST
SERVICE DE NETTOYAGE DE TRANSACTION DE CHAÎNE DE BLOCS

(43) Date of publication of application: 11.06.2025
(60) Divisional application: 26178961.4
(73) Proprietor: Turing IP Holdings Ltd., St. John (AG)
(72) Inventor: DUCROUX, Mathieu, London W1W 8AP (GB)
(74) Representative: Page White Farrer

(56) References cited:
- US-A1- 2022 216 997
- US-A1- 2023 129 227

## Description

### TECHNICAL FIELD

The present disclosure relates to blockchain networks and, in particular, to methods and devices for validating blocks involving large volume transaction flow.

### BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain is formed from a chain of blocks of data, wherein each block includes one or more transactions. Each transaction, other than so-called "coinbase transactions", points back to a preceding transaction in a sequence which may span one or more blocks up until one or more coinbase transactions. Coinbase transactions are discussed below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at a node, and the publication of blocks can be achieved through the publication of mere block headers.

The transactions in the blockchain are used to perform one or more of the following: to convey a digital asset (i.e. a number of digital tokens), to order a set of journal entries in a virtualised ledger or registry, to receive and process timestamp entries, and/or to time-order index pointers. A blockchain can also be exploited in order to layer additional functionality on top of the blockchain. Blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in detail below. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction includes one or more inputs and one or more outputs. Any spendable output includes an element specifying an amount of the digital asset that is derivable from the proceeding sequence of transactions. The spendable output is sometimes referred to as a UTXO ("unspent transaction output"). The output may further include a locking script specifying a condition for the future redemption of the output. A locking script is a predicate defining the conditions necessary to validate and transfer digital tokens or assets. Each input of a transaction (other than a coinbase transaction) includes a pointer (i.e. a reference) to such an output in a preceding transaction, and may further include an unlocking script for unlocking the locking script of the pointed-to output. Consider that a pair of transactions may be labelled a first and a second transaction (or "target" transaction). The first transaction includes at least one output specifying an amount of the digital asset, and having a locking script defining one or more conditions of unlocking the output. The second, target transaction has at least one input, including a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

United States patent application publication document US 2022/216997 A1 discloses a computer-implemented method of generating a secondary transaction identifier of a target transaction, the secondary transaction identifier enabling a querying user to determine whether the target transaction comprises a candidate data field.

As blockchain technology is applied to larger and larger numbers of transactions, managing the volume of transactions become challenging. For example, common credit card payment networks, such as Mastercard or Visa's payment networks, collectively typically process thousands of transactions per second. It may be advantageous to have solutions that would enable a blockchain network to manage similar levels of throughput.

### BRIEF DESCRIPTION OF THE DRAWINGS

Reference will now be made, by way of example, to the accompanying drawings which show example embodiments of the present application and in which:
FIG. 1 shows an example system for implementing a blockchain;
FIG. 2 illustrates an example transaction protocol;
FIG. 3A shows an example implementation of a client application;
FIG. 3B shows an example of a user interface for the client application;
FIG. 4 illustrates example node software for a blockchain node;
FIG. 5 diagrammatically shows a simplified example blockchain node for processing a large volume of blockchain transactions;
FIG. 6 shows, in flowchart form, one example method of performing transaction clean-up as a result of a block announcement;
FIG. 7 shows, in flowchart form, another example method of performing transaction clean-up; and
FIG. 8 shows, in flowchart form, a further example method of performing transaction clean-up.

Like reference numerals are used in the drawings to denote like elements and features.

### DETAILED DESCRIPTION OF EXAMPLES

In one aspect, there may be provided a computer-implemented method of processing blockchain transactions by a node. The method may include, during a mining phase, building a candidate datastore containing a transaction identifier for each validated transaction in a candidate block; receiving, from another node, two or more arrays, each array containing a respective set of transaction identifiers; and identifying transaction identifiers in the candidate datastore that match transaction identifiers in one of the two or more arrays and recording, for each matching transaction identifier in the candidate datastore, an array identifier of said one of the two or more arrays. The method may further include, during a block validation phase, after receiving a block solution from said another node where the block solution identifies a plurality of arrays, identifying each transaction identifier in the candidate datastore having a recorded array identifier that matches one of the arrays in the plurality of arrays and marking that transaction identifier as being in the block solution; and after the block solution is validated, identifying all transactions identifiers in the candidate datastore not marked as being in the block solution and making those transaction identifiers available to another service in the node.

In some implementations, identifying each transaction identifier in the candidate datastore having a recorded array identifier that matches one of the arrays in the plurality of arrays includes building a list of array identifiers from the block solution in memory. In some cases, building the list of array identifiers includes building a hash table populated by the array identifiers from the block solution. In some of those cases, marking that transaction identifier as being in the block solution includes, for each array identifier in the hash table, searching the candidate datastore to identify transaction identifiers that are marked with that array identifier and marking those transaction identifiers as being in the block solution.

In some implementations, marking transaction identifiers as being in the block solution includes marking the transaction identifiers as in tip i, where i is an index to the block solution among a plurality of announced block solutions.

In some implementations, identifying all transaction identifiers in the candidate datastore not marked as being in the block solution includes deleting from the candidate datastore all transaction identifiers marked as being in the block solution. In some cases, making those transaction identifiers available includes copying and sending all remaining transaction identifiers from the candidate datastore to the another service.

In some implementations, the block solution includes a new array not previously-received from the another node and the method further includes obtaining a set of transaction identifiers included in the new array and loading them into memory; and querying the candidate datastore for a match to each transaction identifier in the set and, if the match is found, marking that transaction identifier in candidate datastore as being in the block solution. A new array not previously-received may be an array not received during the mining phase.

In some implementations, the method includes building the candidate block containing the validated transactions while building the candidate datastore.

In some implementations, making those transaction identifiers available to another service includes forwarding those transaction identifiers to at least a block assembly service for building a new candidate block.

In some implementations, making those transaction identifiers available may include notifying the another service that the candidate database is available for access by the another service and that it contains all transactions identifiers not marked as being in the block solution.

In some implementations, the another service includes a mempool monitoring service or a double spend detection service.

In another aspect, the present application describes a method of processing blockchain transactions by a node that includes, during a mining phase, building a candidate datastore containing a transaction identifier for each validated transaction in a candidate block; receiving, from another node, two or more arrays, each array containing a respective set of transaction identifiers; and identifying transaction identifiers in the candidate datastore that match transaction identifiers in one of the two or more arrays and recording, for each matching transaction identifier in the candidate datastore, an array identifier of said one of the two or more arrays. The method may further include, during a block validation phase, after receiving a block solution from said another node where the block solution identifies a plurality of arrays, identifying each transaction identifier in the candidate datastore associated with said another node and marking those transaction identifiers as being in the block solution; and after the block solution is validated, identifying all transactions identifiers in the candidate datastore not marked as being in the block solution and making those transaction identifiers available to another service in the node.

In some implementations, recording includes recording, for each matching transaction identifier in the candidate datastore, a node identifier for said another node. In some cases, identifying each transaction identifier in the candidate datastore associated with said another node includes identifying each transaction identifier in the candidate datastore marked with the node identifier for said another node. In some such cases, identifying each transaction identifier in the candidate datastore marked with the node identifier includes, as a precondition, determining that all arrays received from said another node are included in the block solution.

In some implementations, the block solution includes a new array not previously-received from the another node and the method further includes obtaining a set of transaction identifiers included in the new array and loading them into memory; and querying the candidate datastore for a match to each transaction identifier in the set and, if the match is found, marking that transaction identifier in candidate datastore as being in the block solution. A new array not previously-received may be an array not received during the mining phase.

In some implementations, marking transaction identifiers as being in the block solution includes marking the transaction identifiers as in tip *i,* where *i* is an index to the block solution among a plurality of announced block solutions.

In some implementations, a blockchain network includes a plurality of other nodes and the node includes a respective candidate datastore for each of the other nodes, and identifying each transaction identifier in the candidate datastore associated with said another node includes identifying the respective candidate datastore associated with said another node.

In some implementations, the method includes building the candidate block containing the validated transactions while building the candidate datastore. Building the candidate block may be carried out by a block assembly service using a first memory, and the candidate datastore may be contained in a second memory separate from the first memory.

In some implementations, making those transaction identifiers available to another services includes forwarding those transaction identifiers to at least a block assembly service for building a new candidate block.

In some implementations, making those transaction identifiers available may include notifying the another service that the candidate database is available for access by the another service and that it contains all transactions identifiers not marked as being in the block solution.

In some implementations, the another service includes a mempool monitoring service or a double spend detection service.

In yet a further aspect, the present application describes a computer-implemented method of processing blockchain transactions by a node. The method may include, during a mining phase, building, in memory, a list of transaction identifiers that are included in a candidate block being mined by the node; receiving a block solution from another node specifying a solved block and, in response, loading a set of transaction identifiers from the solved block into the memory; querying the set of transaction identifiers for a match to each transaction identifier in the list and if the match is found, marking the transaction identifier in the list as being included in the solved block; and after the block solution is validated, removing all transactions identifiers in the list marked as being in the solved block and building a new candidate block using any remaining transaction identifiers in the list.

In another aspect, there may be provided a computing device implementing a node on a blockchain network. The computing device may include memory, one or more processors, and computer-executable instructions that, when executed, cause the processors to carry out one or more of the methods described herein.

In yet another aspect, there may be provided a computer-readable medium storing processor-executable instructions, the processor-executable instructions including instructions that, when executed by one or more processors, cause the processors to carry out at least one of the methods described herein.

Other example embodiments of the present disclosure will be apparent to those of ordinary skill in the art from a review of the following detailed description in conjunction with the drawings.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of... or..." is intended to cover any one or more of the listed elements, including any one of the listed elements alone, any sub-combination, or all of the elements, without necessarily excluding any additional elements, and without necessarily requiring all of the elements.

### Example System Overview

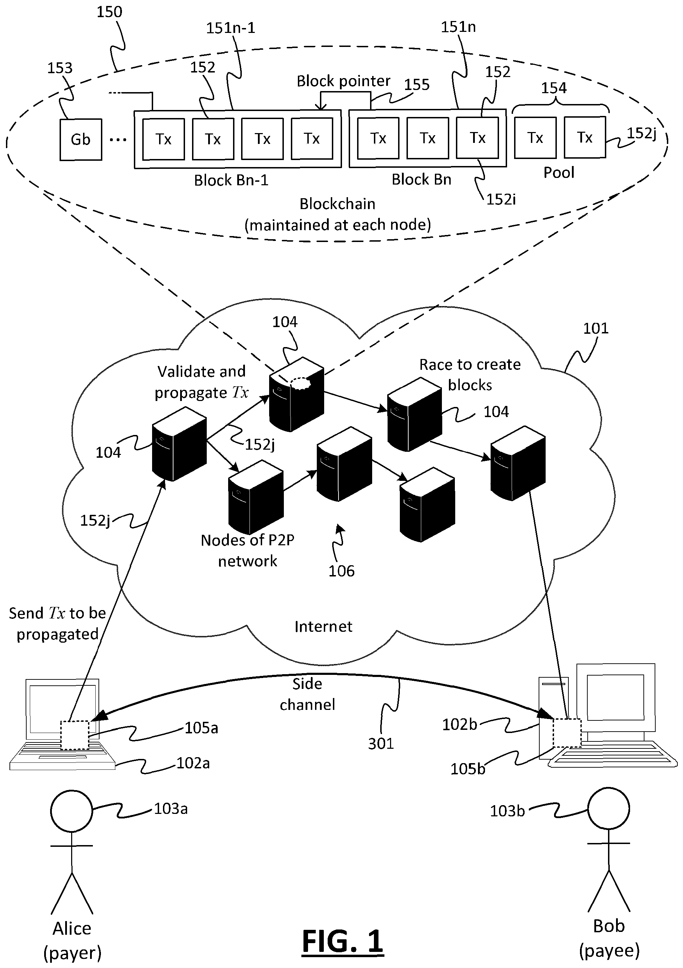

Figure 1 shows an example system 100 for implementing a blockchain 150. The system 100 may include a packet-switched network 101, typically a wide-area internetwork such as the Internet. The packet-switched network 101 includes a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 includes computer equipment of a peer, with different ones of the nodes 104 belonging to different peers. Each blockchain node 104 includes a processing apparatus implemented by one or more processors, e.g. one or more central processing units (CPUs), accelerator processors, application specific processors and/or field programmable gate arrays (FPGAs), and other equipment such as Application Specific Integrated Circuits (ASICs). Each node also includes memory, i.e. computer-readable storage in the form of a non-transitory computer-readable medium or media. The memory may include one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 includes a chain of blocks of data 151, wherein a respective copy of the blockchain 150 is maintained at each of a plurality of blockchain nodes 104 in the distributed or blockchain network 160. As mentioned above, maintaining a copy of the blockchain 150 does not necessarily mean storing the blockchain 150 in full. Instead, the blockchain 150 may be pruned of data so long as each blockchain node 150 stores the blockheader (discussed below) of each block 151. Each block 151 in the chain includes one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 has at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also includes a block pointer 155 pointing back to the previously created block 151 in the chain so as to define a sequential order to the blocks 151. Each transaction 152 (other than a coinbase transaction) has a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set 154 of transactions 152 waiting to be incorporated into blocks 151. The ordered set 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input includes a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also includes the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when an entity, such as a user or machine, 103 wishes to enact a new transaction 152j, then the entity sends the new transaction from its computer terminal 102 to a recipient. The entity or the recipient will eventually send this transaction to one or more of the blockchain nodes 104 of the network 106 (which nowadays are typically servers or data centres, but could in principle be other user terminals). It is also not excluded that the entity 103 enacting the new transaction 152j could send the transaction to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may include checking that the cryptographic signature or other authorisation of the entity 103 included in the input of the new transaction 152j matches a condition defined in the output of the preceding transaction 152i which the new transaction assigns, wherein this condition typically includes at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned is whether it has yet been validly redeemed by the input of another, onward transaction 152j according to the blockchain node protocol. Another condition for a transaction to be valid is that the output of the preceding transaction 152i which it attempts to assign or redeem has not already been assigned/redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered set 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this includes searching for a "nonce" value such that when the nonce is concatenated with a representation of the ordered set of transactions 154 and hashed, then the output of the hash meets a predetermined condition. For example, the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. A significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the ordered set of yet to be published transactions 154 at any given time, depending on when they started searching for a solution or the order in which the transactions were received. Whoever solves their respective puzzle first defines which transactions 152 are included in the next new block 151n and in which order, and the current set 154 of unpublished transactions is updated. The blockchain nodes 104 then continue to race to create a block from the newly-defined outstanding ordered set of unpublished transactions 154, and so forth. A protocol also exists for resolving any "fork" that may arise, which is where two blockchain nodes 104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to assign an accepted amount of the digital asset in a new special kind of transaction which distributes a defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server that includes one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network but do not participate in validating, constructing or propagating transactions and blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus including one or more processors, e.g. one or more CPUs, GPUs, other accelerator processors, application specific processors, and/or FPGAs. The computer equipment 102 of each party 103 further includes memory, i.e. computer-readable storage in the form of a non-transitory computer-readable medium or media. This memory may include one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software such as a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 includes at least one user terminal, e.g. a desktop or laptop computer, a tablet, a smartphone, or a wearable device such as a smartwatch. The computer equipment 102 of a given party 103 may also include one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 includes at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality includes collating the amounts defined in the outputs of the various 152 transactions scattered throughout the blockchain 150 that belong to the party in question.

It will be understood that whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This may include first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered set of transactions 154 maintained at a given blockchain node 104, that blockchain node 104 will start competing to solve the proof-of-work puzzle on the latest version of their respective ordered set of transactions 154 including the new transaction 152 (recall that other blockchain nodes 104 may be trying to solve the puzzle based on a different ordered set of transactions 154, but whoever gets there first will define the ordered set of transactions that are included in the latest block 151, and eventually a blockchain node 104 will solve the puzzle for a part of the ordered set 154 which includes Alice's transaction 152j). Once the proof-of-work has been done for the ordered set 154 including the new transaction 152j, it immutably becomes part of one of the blocks 151 in the blockchain 150. Each transaction 152 includes a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

### UTXO-based Model

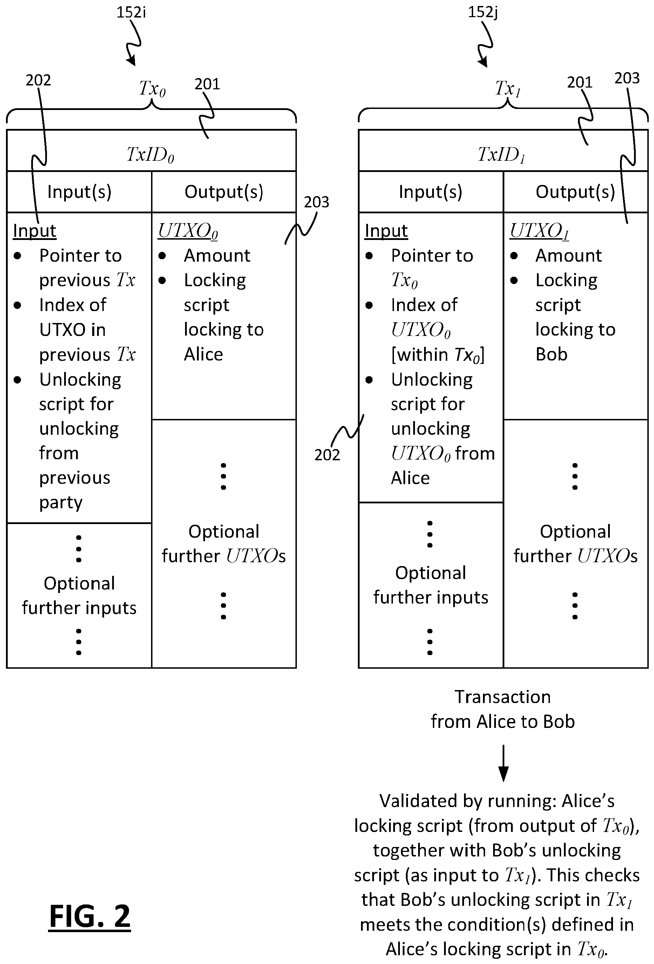

Figure 2 illustrates an example transaction protocol. This is an example of a UTXO-based protocol. A transaction 152 (abbreviated "Tx") is the fundamental data structure of the blockchain 150 (each block 151 containing one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 is a data structure having one or more inputs 202, and one or more outputs 203. Each output 203 may include an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also include a header 201, which may include an indicator of the size of the input field(s) 202 and output field(s) 203. The header 201 may also include an ID of the transaction. In some embodiments, the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "*Tx₁*". It takes an amount of the digital asset that is locked to Alice in the output 203 of a preceding transaction 152i in the sequence, and transfers at least some of this to Bob. The preceding transaction 152i is labelled "*Tx₀*" in Figure 2. *Tx₀* and *Tx₁* are just arbitrary labels. They do not necessarily mean that *Tx₀* is the first transaction in the blockchain 151, nor that *Tx₁* is the immediate next transaction in the pool 154. *Tx₁* could point back to any preceding (i.e. antecedent) transaction that still has an unspent output 203 locked to Alice.

The preceding transaction *Tx₀* may already have been validated and included in a block 151 of the blockchain 150 at the time when Alice creates her new transaction *Tx₁,* or at least by the time she sends it to the network 106. It may already have been included in one of the blocks 151 at that time, or it may be still waiting in the ordered set 154 in which case it will soon be included in a new block 151. Alternatively *Tx₀* and *Tx₁* could be created and sent to the network 106 together, or *Tx₀* could even be sent after *Tx₁* if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction *Tx₀* is a particular UTXO, labelled here *UTXO₀.* Each UTXO includes a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). That is, the locking script defines an unlocking condition, typically include a condition that the unlocking script in the input of the subsequent transaction include the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, *UTXO₀* in the output 203 of *Tx₀* includes a locking script [Checksig *P_{A}*] which requires a signature Sig *P_{A}* of Alice in order for *UTXO₀* to be redeemed (strictly, in order for a subsequent transaction attempting to redeem *UTXO₀* to be valid). [Checksig *P_{A}*] contains a representation (i.e. a hash) of the public key *P_{A}* from a public-private key pair of Alice. The input 202 of *Tx₁* includes a pointer pointing back to *Tx₀* (e.g. by means of its transaction ID, *TxID₀,* which in some embodiments is the hash of the whole transaction *Tx₀*). The input 202 of *Tx₁* includes an index identifying *UTXO₀* within *Tx₀,* to identify it amongst any other possible outputs of *Tx₀.* The input 202 of *Tx₁* further includes an unlocking script <Sig *P_{A}*> which has a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction *Tx₁* arrives at a blockchain node 104, the node applies the node protocol. This may include running the locking script and unlocking script together to check whether the unlocking script meets the condition defined in the locking script (where this condition may include one or more criteria). In some embodiments this may involve concatenating the two scripts:
<Sig *P_{A}*> <*P_{A}*> ∥ [Checksig *P_{A}*]
where "∥" represents a concatenation and "<... >" means place the data on the stack, and "[...]" is a function carried out by the locking script (in this example a stack-based language). Equivalently the scripts may be run one after the other, with a common stack, rather than concatenating the scripts. Either way, when run together, the scripts use the public key *P_{A}* of Alice, as included in the locking script in the output of *Tx₀,* to authenticate that the unlocking script in the input of *Tx₁* contains the signature of Alice signing the expected portion of data. The expected portion of data itself (the "message") also needs to be included in order to perform this authentication. In embodiments the signed data includes the whole of *Tx₁* (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically includes hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in *Tx₁* meets the one or more conditions specified in the locking script of *Tx₀* (so in the example shown, if Alice's signature is provided in *Tx₁* and authenticated), then the blockchain node 104 deems *Tx₁* valid. This means that the blockchain node 104 will add *Tx₁* to the ordered set of transactions 154. The blockchain node 104 will also forward the transaction *Tx₁* to one or more other blockchain nodes 104 in the network 106, so that it will be propagated throughout the network 106. Once *Tx₁* has been validated and included in the blockchain 150, this defines *UTXO₀* from *Tx₀* as spent. Note that *Tx₁* can only be valid if it spends an unspent transaction output 203. If it attempts to spend an output that has already been spent by another transaction 152, then *Tx₁* will be invalid even if all the other conditions are met. Hence the blockchain node 104 also needs to check whether the referenced UTXO in the preceding transaction *Tx₀* is already spent (i.e. whether it has already formed a valid input to another valid transaction). This is one reason why it is important for the blockchain 150 to impose a defined order on the transactions 152. In practice, a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However, the amount from the UTXO can be split between multiple outputs of the next transaction. For example, the amount defined in *UTXO₀* in *Tx₀* can be split between multiple UTXOs in *Tx₁.* Hence if Alice does not want to give Bob all of the amount defined in *UTXO₀,* she can use the remainder to give herself change in a second output of *Tx₁,* or pay another party.

In practice Alice will also usually need to include a fee for the bitcoin node that publishes her transaction 104. If Alice does not include such a fee, *Tx₀* may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. For example, say a pointer to *UTXO₀* is the only input to *Tx₁,* and *Tx₁* has only one output *UTXO₁.* If the amount of the digital asset specified in *UTXO₀* is greater than the amount specified in *UTXO₁,* then the difference may be assigned by the node 104 that publishes the block containing *UTXO₁.* Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence, typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. For example, the data could include a document which it is desired to store in the blockchain.

Typically an input of a transaction contains a digital signature corresponding to a public key *P_{A}.* In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically includes the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed includes authenticating a signature. More generally the scripting language could be used to define any one or more conditions. Hence the more general terms "locking script" and "unlocking script" may be preferred.

As shown in Figure 1, the client application on each of Alice and Bob's computer equipment 102a, 120b, respectively, may include additional communication functionality. This additional functionality enables Alice 103a to establish a separate side channel 301 with Bob 103b (at the instigation of either party or a third party). The side channel 301 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 301 may be used to exchange any other transaction related data, such as keys, negotiated amounts or terms, data content, etc.

The side channel 301 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 301 as referred to anywhere herein may include any one or more links via one or more networking technologies or communication media for exchanging data "off-chain", i.e. separately from the blockchain network 106. Where more than one link is used, then the bundle or collection of off-chain links as a whole may be referred to as the side channel 301. Note therefore that if it is said that Alice and Bob exchange certain pieces of information or data, or such like, over the side channel 301, then this does not necessarily imply all these pieces of data have to be send over exactly the same link or even the same type of network.

### Client Software

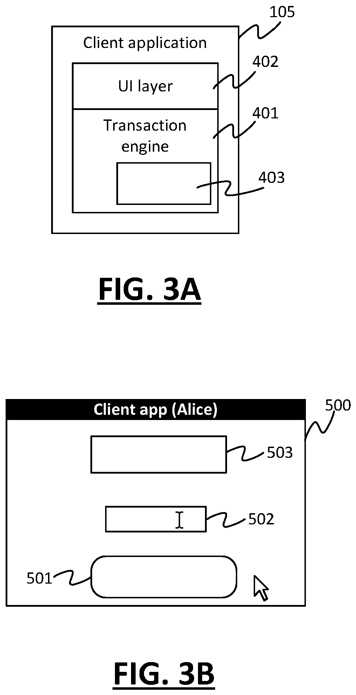

Figure 3A illustrates an example implementation of the client application 105 for implementing embodiments of the presently disclosed scheme. The client application 105 may include a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the processes discussed above.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could include one or more display screens (touch or non-touch screen) for providing a visual output, one or more speakers for providing an audio output, and/or one or more haptic output devices for providing a tactile output, etc. The user input means could include for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note that whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may include one or more UI elements 501, 502, 502 rendered as distinct UI elements via the user output means.

For example, the UI elements may include one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands).

Alternatively or additionally, the UI elements may include one or more data entry fields 502. These data entry fields 502 are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may include one or more information elements 503 output to output information to the user. For example, the information could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3B is only a schematized mock-up and in practice it may include one or more further UI elements, which for conciseness are not illustrated.

### Node Software

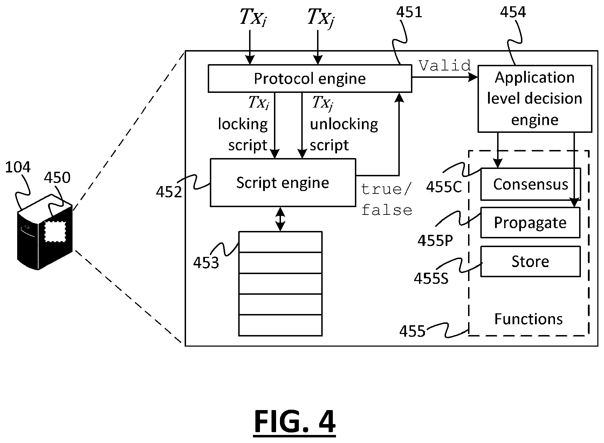

Figure 4 illustrates an example of the node software 450 that is run on each blockchain node 104 of the network 106, in the example of a UTXO- or output-based model. Note that another entity may run node software 450 without being classed as a node 104 on the network 106, i.e. without performing the actions required of a node 104. The node software 450 may contain, but is not limited to, a protocol engine 451, a script engine 452, a stack 453, an application-level decision engine 454, and a set of one or more blockchain-related functional modules 455. Each node 104 may run node software that contains, but is not limited to, all three of: a consensus module 455C (for example, proof-of-work), a propagation module 455P and a storage module 455S (for example, a database). The protocol engine 401 is typically configured to recognize the different fields of a transaction 152 and process them in accordance with the node protocol. When a transaction 152j (*Txⱼ*) is received having an input pointing to an output (e.g. UTXO) of another, preceding transaction 152i (*Tx*_{*m*-1}), then the protocol engine 451 identifies the unlocking script in *Txⱼ* and passes it to the script engine 452. The protocol engine 451 also identifies and retrieves *Txᵢ* based on the pointer in the input of *Txⱼ. Txᵢ* may be published on the blockchain 150, in which case the protocol engine may retrieve *Txᵢ* from a copy of a block 151 of the blockchain 150 stored at the node 104. Alternatively, *Txᵢ* may yet to have been published on the blockchain 150. In that case, the protocol engine 451 may retrieve *Txᵢ* from the ordered set 154 of unpublished transactions maintained by the node104. Either way, the script engine 451 identifies the locking script in the referenced output of *Txᵢ* and passes this to the script engine 452.

The script engine 452 thus has the locking script of *Txᵢ* and the unlocking script from the corresponding input of *Txⱼ.* For example, transactions labelled *Tx*₀ and *Tx*₁ are illustrated in Figure 2, but the same could apply for any pair of transactions. The script engine 452 runs the two scripts together as discussed previously, which will include placing data onto and retrieving data from the stack 453 in accordance with the stack-based scripting language being used (e.g. Script).

By running the scripts together, the script engine 452 determines whether or not the unlocking script meets the one or more criteria defined in the locking script - i.e. does it "unlock" the output in which the locking script is included? The script engine 452 returns a result of this determination to the protocol engine 451. If the script engine 452 determines that the unlocking script does meet the one or more criteria specified in the corresponding locking script, then it returns the result "true". Otherwise it returns the result "false".

In an output-based model, the result "true" from the script engine 452 is one of the conditions for validity of the transaction. Typically there are also one or more further, protocol-level conditions evaluated by the protocol engine 451 that must be met as well; such as that the total amount of digital asset specified in the output(s) of *Txⱼ* does not exceed the total amount pointed to by its inputs, and that the pointed-to output of *Txᵢ* has not already been spent by another valid transaction. The protocol engine 451 evaluates the result from the script engine 452 together with the one or more protocol-level conditions, and only if they are all true does it validate the transaction *Txⱼ.* The protocol engine 451 outputs an indication of whether the transaction is valid to the application-level decision engine 454. Only on condition that *Txⱼ* is indeed validated, the decision engine 454 may select to control both of the consensus module 455C and the propagation module 455P to perform their respective blockchain-related function in respect of *Txⱼ.* This may include the consensus module 455C adding *Txⱼ* to the node's respective ordered set of transactions 154 for incorporating in a block 151, and the propagation module 455P forwarding *Txⱼ* to another blockchain node 104 in the network 106. Optionally, in embodiments the application-level decision engine 454 may apply one or more additional conditions before triggering either or both of these functions. For example, the decision engine may only select to publish the transaction on condition that the transaction is both valid and leaves enough of a transaction fee.

Note also that the terms "true" and "false" herein do not necessarily limit to returning a result represented in the form of only a single binary digit (bit), though that is certainly one possible implementation. More generally, "true" can refer to any state indicative of a successful or affirmative outcome, and "false" can refer to any state indicative of an unsuccessful or non-affirmative outcome. For instance in an account-based model, a result of "true" could be indicated by a combination of an implicit, protocol-level validation of a signature and an additional affirmative output of a smart contract (the overall result being deemed to signal true if both individual outcomes are true).

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In some embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In some other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

### Large volume transaction handling

As the capacity of the network grows to accommodate larger numbers of transactions, nodes will need to adapt to handling significant flows of transactions. In some possible scenarios, the flow of new transactions may grow to tens of thousands, hundreds of thousands, even millions of transactions per second.

One of the mechanisms for addressing the challenge of large volumes and large blocks is to have nodes pre-propagate their candidate blocks prior to finding a solution. In this manner, once a block solution is found, the successful node need only send the solution details, *e.g.* the coinbase transaction, the Merkle root, the nonce, etc., instead of sending the full ordered list of TxIDs. Other nodes can then validate the solution based on the already-received ordered list of TxIDs.

To address the issue of large constant influx of new transactions, nodes may engage in dynamic transaction validation and block assembly in which the node builds successive arrays of ordered transactions, and the candidate block being mined at that node is made up of the arrays. As new arrays are completed, they are added to the candidate block. Meanwhile, the node propagates its completed arrays to other nodes. When a block solution is found, the node sends the solution details and an ordered list of array identifiers that specify the order of the arrays in the solved block. In this manner, the other nodes can quickly assemble the solved block from the arrays previously received from that node, and then engaged in validating the block solution.

It will be appreciated that in the array-based solution described above, a node will receive a number of arrays from other nodes that reflect the arrays built by those nodes and on which they are conducting mining operations. The node will therefore maintain a record of the arrays from each node. In order to speed block validation, the node may be configured to do some validation work in advance of announcement of a block solution. Block assembly and validation are potential bottlenecks to be addressed in the case of large volume transaction flow. There are certain things that block validation involves, including verifying that: (1) transaction inputs are valid (e.g. they reference an existing output and their unlocking script is valid); (2) transactions are not double-spends of outputs from previous blocks; (3) transactions are not double-spends of outputs in the current block; and (4) transactions are topologically ordered. Topological ordering mandates that a transaction in a block that spends an output from another transaction in the same block must appear later in the order, *i.e.* a child transaction must appear after its parents in the ordered set of transactions in a block. A block validation service may carry out some work during the mining phase using a transaction graph datastore or a set of array transaction databases, in order to be ready to quickly confirm topological ordering once a block solution is found by another node. In some cases, preprocessing of arrays can be delegated to separate processors, enabling horizontal scaling.

One of the technical challenges for blockchain nodes in the context of large volume transaction processing is that once a valid block has been found, the node needs to flush out or remove the transactions that are now in the confirmed block so they are not in the node's current candidate block. On a high level, a clean-up service may be configured to identify transactions in the candidate block that are included in the announced block from another node and it then removes those identified transactions from the candidate block. However, because this process will likely be carried out in parallel with the block validation process, and because competing block announcements may be received, the clean-up operation is ideally carried out in a manner that is reversible so that it can be undone if needed. In some cases, it may be advantageous to carry out operations to prepare for clean-up prior to announcement of a block solution so that the clean-up operation can be carried out as quickly as possible once the newly-announced block has been validated.

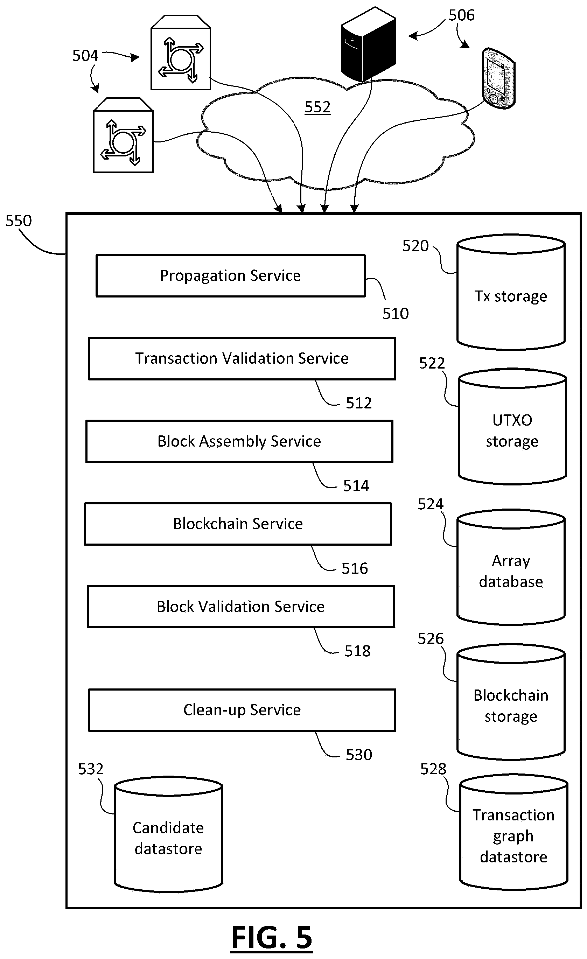

Reference will now be made to Figure 5, which diagrammatically shows a simplified example blockchain node 550 for processing a large volume of blockchain transactions. In this example, the node 550 is shown as a single device; however, it will be appreciated that the node 550 may be implemented using one or a plurality of computing devices. The computing devices include one or more processors, memory, internal communications busses, and external network communication subsystems, among other systems.

The blockchain node 550 is configured for communication over one or more computer networks 552. The computer networks 552 may include a peer-to-peer computer network, such as a blockchain network interconnecting blockchain nodes, such as other blockchain nodes 504. The computer networks 552 may include public and/or private computing networks, including the Internet. In some cases, the computer networks 552 may support multicast communications. The computer networks 552 may enable communications from user devices 506, such as end user computing or edge devices that may generate and send blockchain transactions or queries. The user devices may include mobile devices, point-of-sale devices, merchant computing systems, e-commerce platforms, financial services platforms, payment processing systems, and other such systems or devices.

The blockchain node 550 may implement a number of services, including a propagation service 510, a transaction validation service 512, a block assembly service 514, a blockchain service 516 and a block validation service 518. Some or all of these service may be horizontally scalable.

In addition, the blockchain node 550 may maintain or have access to certain stored data. The data may be stored in database format or in other data structures depending on the implementation. The stored data may include, for example, transaction storage 520, UTXO storage 522, one or more array databases 524, and a blockchain storage 526.

The propagation service 510 manages network communications for the blockchain node 550. It may listen for transactions incoming via a IPv6 multicast network, for example. It may perform some gating on incoming transactions, such as basic validity checks like ensuring the transaction is formatted correctly, has non-zero inputs and outputs, and other such basic validity checks.

The transaction validation service 512 may validate a transaction according to the rules of the applicable blockchain protocol. It may, for example, verify that inputs consumed in the transaction are valid unspent outputs of a confirmed or unconfirmed transaction, e.g. a UTXO. The transaction validation service 512 may verify that a block is valid in part through referencing the UTXO storage 522 to verify that inputs are unspent. Validated transactions are passed to the block assembly service 514.

The transaction validation service 512 or a sub-service may mark any inputs to the transactions as spent in the UTXO storage 522. The validated transaction may be stored in the transaction storage 520.

The block assembly service 514 is responsible for creating new candidate blocks for miners associated with the blockchain node 550. The block assembly service 514 receives a stream or flow of validated transactions and assembles them into arrays of ordered transaction identifiers. As an array is completed, its Merkle root is calculated, it is added to the current candidate block, the Merkle root of the candidate block is updated, and the candidate block header is pushed to the miners. A newly-completed array is announced to other blockchain nodes over the computer networks 552.

The blockchain service 516 manages the block headers and arrays in a block and records block data in the blockchain storage 526. In some cases, the blockchain storage 526 may be a complete copy of the current blockchain. In some cases, the blockchain storage 526 may be metadata, such as block headers and array data including TxIDs, but excluding full transaction data.

In some cases, the array discussed above may be referred to as a sub-tree since its transaction identifiers form a portion of the total consolidated ordered list of transaction identifiers that may be in a candidate block, such that the transaction identifiers from the array may be used to find a part of the Merkle tree for the candidate block, *i.e.* a "sub-tree". Each array has a unique array identifier, or "sub-tree identifier", that is sent with the array when propagated to other blockchain nodes 504 over the blockchain network. The other nodes, having determined that they have seen and validated all transactions in the array may then store the array identifier in memory in association with the array data. Likewise, when the blockchain node 550 receives arrays from other blockchain nodes 504 it determines whether it has received and validated all the transactions listed in the array by transaction identifier and it then validates the Merkle root of the array and stores the array identifier in memory in association with the array data within the array database 524. The arrays are stored in association with an identifier for the node that sent them. That is, the array database 524 may include a set of arrays associated with a particular node identifier unique to the node that created and propagated those arrays.

In the examples below, the block validation service 518 serves to verify the validity of a block announced by one of the other blockchain nodes 504. It listens for arrays communicated by other blockchain nodes 504 and carries out functions to compactly store the array data in a manner that enables fast and efficient validation of a block, if a solution is found. A block announcement from one of the other nodes 504 includes block header data and an ordered list of array identifiers from which the node can determine the block contents, provided it has already received the arrays corresponding to the array identifiers. The block solution may be referred to herein as a newly-solved block.

In order to enable large volume transaction processing, the node 550 must be able to quickly and efficiently handle incoming array data from other nodes, verify its validity, and, when a block solution is announced, quickly and accurately validate the block. To meet these challenges, the block validation service 518 is ideally horizontally scalable and stores the array data in a structure and a manner that enables the node 550 to quickly validate a block once a solution is announced. In one such solution, the node 550 utilizes a transaction graph datastore 528 to map transaction data and interrelationships to enable verification of topological ordering once a solution is found. In another such solution, the node 550 utilizes a set of array transaction databases (not shown) that, for each array, track inputs to the transactions of the array from previous blocks or other arrays, and outputs from transactions of the array that are not consumed within the array.

The blockchain node 550 in this example further includes a clean-up service 530. The clean-up service 530 may be implemented as a stand alone service, or may be part of the block validation service 518 or part of the block assembly service 514 in some cases. The clean-up service 530 is configured to identify which of the validated transactions in a current candidate block created by the block assembly service 514 are contained in a block solution received from another node and, once the block solution is validated, to remove those identified transactions so that the block assembly service 514 can build a new block from the remaining validated transactions that were not included in the block solution, *i.e.* the unconfirmed transactions. In some cases, the cleaned-up list of remaining unconfirmed transaction identifiers may be forwarded to the block assembly service 514. In some cases, a database or other memory structure containing the cleaned-up list of remaining unconfirmed transaction identifiers may be made available to the block assembly service 514. In some other cases, the cleaned-up list of remaining unconfirmed transaction identifiers may be forwarded to, or made available to, another service within the node other than the block assembly service. Examples of the another service include a mempool monitoring service or a double spend detection service.

In one example below, the clean-up service 530 may rely on carrying out the comparison of transaction identifiers in the announced block with transaction identifiers in the node's own candidate block after the block solution is announced. This may be carried out, in one implementation, by using the same RAM that is used for the candidate block to load the TxIDs of the announced block, enabling the comparison to be made within the same RAM. To improve speed and scalability, in another example solution the clean-up service 530 may build a candidate datastore separate from the RAM containing the TxIDs of all transactions in the node's own candidate block. During the mining phase, the clean-up service 530 may use the candidate datastore 532 to prepare for quick clean-up once a block is validated.

In a first example solution, the clean-up service 530 may identify transactions listed in a received array from another node and may mark the corresponding transaction identifiers in the candidate datastore 532 with the array identifier, so that the candidate datastore 532 has a record of which transaction identifiers are contained in which arrays. In a second example solution, the clean-up service 530 may alternatively or additionally make the transaction identifiers in the candidate datastore 532 with a node identifier indicating that the transaction identifier is in an array received from that specific node. In both examples, once an announced block is received, while the block validation service 518 is carrying out validation of the block the clean-up service 530 can quickly identify, based on array identifiers and/or node identifier, which transactions in the candidate datastore 532 are included in the announced block. This enables the clean-up service 530 to quickly either remove or delete the included transactions, leaving only the unconfirmed transaction identifiers in the candidate datastore 532. Alternative, it can extract the unconfirmed transaction identifiers from the candidate datastore 532. Either way, the clean-up service 530 is thereby configured to provide the block assembly service 514 with a list or set of unconfirmed transaction identifiers so that the block assembly service 514 can quickly build a new candidate block to enable the blockchain node 550 to initiate mining on the newly-added block as soon as possible.

### Clean-up Service

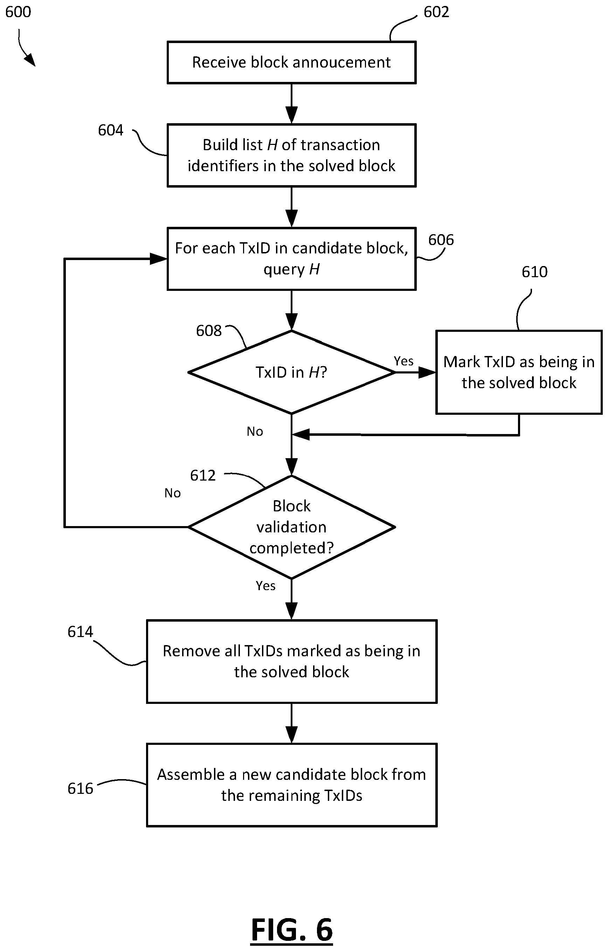

Figure 6 shows, in flowchart form, one example method 600 of performing transaction clean-up as a result of a block announcement. The method 700 may be implemented by a blockchain node. The blockchain node may be implemented using one or more computing devices. In this example, the clean-up service and the block assembly service share the same RAM. The clean-up service therefore has access to the list of transactions in the candidate block.

The block assembly service, as part of building arrays of transaction identifiers that will form the candidate block, builds an ordered list *L* of transaction identifiers that make up the body of the candidate block. The ordered list *L* is stored in RAM. During the mining phase, the block assembly service continues to build arrays using newly-validated transactions since the blockchain node continues to receive new transaction flow at high volumes, potentially a million transaction a second in some examples. Accordingly, during the mining phase the candidate block, *e.g.* the ordered list *L* of transactions, grows quickly as new arrays of transaction identifiers are completed and added to the candidate block.

In operation 602, the node may receive a block solution announcement from another node. In many implementations, the block solution announcement may include block header data, such as the nonce, Merkle root, etc., and some additional information, such a coinbase transaction and an ordered list of array identifiers specifying the arrays included in the solved block.

In operation 604, the clean-up service fetches all the transaction identifiers contained in the announced block. In some cases, it may do so through querying the array database for stored arrays that match the array identifiers. The array database contains previously-received arrays from other nodes and stores them in association with their unique array identifiers; and in particular, it stores the ordered set of TxIDs that form the array along with its unique array identifier. Based on the received block solution, the clean-up service retrieves the arrays contained in the solved block and loads them into RAM. In some cases, it may build a hash table, *e.g.* HashMap *H*, containing the transaction identifiers from all the retrieved arrays.

If the network produces about 1 million transactions per second, the hash table for the solved block may be expected to contain about 600 million transaction identifiers, which would take up more than 19 GB in memory. In the case of a hash table, that number is likely three times higher due to the data structure.

In operation 606, one or more processors may then go through the transactions in the ordered list *L, i.e.* in the node's own candidate block, and see if each transaction identifier in the candidate block is in the solved block. The clean-up service may query the hash table containing the transaction identifiers from the solved block using each of the transaction identifiers in the candidate block. As indicated by operation 608, if there is a match, *i.e.* if a transaction identifier in the candidate block is also in the solved block (*e.g.* a TxID from *L* is in *H*), then in operation 610 that transaction identifier is marked in the ordered list *L* with an identifier for the block. For example, it may be marked with "in_tip_{*i*}", where *i* is an index to the announced block (*e.g.* 0, 1, 2, ...). The need for an index is to account for the situation in which there may be more than one announced block being evaluated and validated by the node. In that case, at some point the blockchain service will determine which one to accept and on which to try to build further blocks. Typically, that selection may be based on the first announced block received, but other factors may be taken into account, such as if yet a further block is added to one of the announced blocks. Also, the validation of one of the announced blocks may fail if it is found to violate a validity check at some point.

Operation 612 reflects an assessment of whether the block is validated and accepted. If not yet, then the node continues assessing transactions that are in the candidate block or have been added to the candidate block, since the transactions will continue to arrive during the validation of an announced block and may be added to new arrays and inserted into the candidate block. As such, newly-incorporated transaction identifiers may be added to the ordered list *L* and the hash table needs to be searched to ensure that they are not already in the announced block. If so, they are marked as indicated above.

Once the block is validated and accepted, then in operation 614 the node removes all the transaction identifiers marked as being included in the solved block from the ordered list *L.* The new accepted block may be referred to as tip *j* in the discussion herein. The clean-up service deletes or removes all transaction identifiers from ordered list *L* that have been marked "in_tip_{*j*}", and it then instructs the block assembly service to build new arrays and a new candidate block using the remaining transaction identifier in the list *L*, as indicated by operation 616.

The above-described method 600 advantageously relies on a single RAM shared between the block assembly service and the clean-up service, making it straightforward to communicate the remaining transaction identifiers. Although elegantly simple, this technique results in high main memory usage and has limited scalability. It is also largely carried out only after a block solution is found. Accordingly, it may be advantageous to employ other techniques that involve preparing for the clean-up before the block solution is announced.

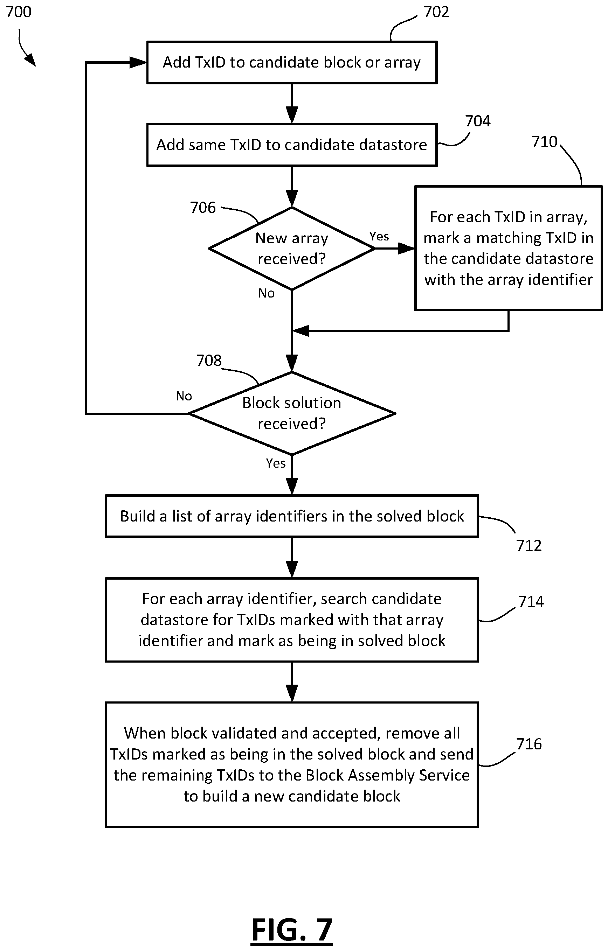

Reference is now made to Figure 7, which shows another example method 700 of performing transaction clean-up as a result of a block announcement. In this example, the method 700 takes advantage of the fact that array data is shared by other nodes prior to the block announcement. That is, the node has already seen all the transaction identifiers listed in each array and has a record of them in the array database. Accordingly, it may prepare a candidate datastore in advance that will permit the clean-up service to carry out the clean-up operation quickly without requiring a large main memory footprint after the block solution is announced.

In this example method 700, the clean-up service manages the candidate datastore in which it stores the transaction identifiers of all transactions in the candidate block. Whenever new transactions are added to the candidate block, the transaction identifiers are also added to the candidate datastore. For example, operation 702 indicates that one or more transaction identifiers, *e.g.* an array of TxIDs, are added to the candidate block being constructed by the block assembly service. In operation 704, the clean-up service adds those same transaction identifiers to the candidate datastore. In the examples described herein, the candidate datastore is a separate data structure from the candidate block; however, in some implementations the candidate datastore and the candidate block are one and the same. That is, the markings of transactions described below may be applied within the database or data structure containing the candidate block without creating a separate candidate datastore. References herein to the candidate datastore will be understood to include both possibilities.

Operation 706 assesses whether a new array has been received from another node on the network. If no block solution has been announced, as indicated by operation 708, then the node continues building the candidate block and building the candidate datastore.

When a new array is received from another node in operation 706, the clean-up service queries the candidate datastore for every transaction identifier in the array to look for a matching transaction identifier in the candidate datastore. Matching transaction identifiers in the candidate datastore are marked as being associated with that array. For example, the transaction identifier in the candidate datastore may be marked with "in_{*array*_*ID}",* where the *array_ID* is the array identifier for the array that was just received, as shown in operation 710.

If we assume each array contains about 1 million transaction identifiers and an array is received from each node about once a second (based on a transaction volume of about 1 million transactions per second), and if there are about 30 nodes in the network, then the clean-up service will perform about 30 million read and write accesses per second to the candidate datastore.

If an array arrives that contains transaction identifiers that are not already in the candidate block and the candidate datastore, the node has likely not previously received those transactions. The node requests copies of those transactions from the other node, validates them, and adds them to a new array so as to include them in the node's own candidate block. The transaction may be stored in the candidate datastore along with the array identifier for the array in which it is contained.

It will be understood that many of the same transactions will be included in different arrays from the other nodes in the networks, since all nodes are working from a largely common pool of transactions. Accordingly, in many instances, transaction identifiers in the candidate datastore may be marked as "in_{*array_ID*}" many times with different array identifiers. If there are 30 other nodes in the network, then the transaction identifiers may be marked with up to 30 different array identifiers.

In operation 708, the node may receive a block announcement from one of the other nodes. As noted previously, the block announcement may include , along with block header data, a list of array identifiers. The array identifiers tell the other nodes which arrays of transaction identifiers make up the content of the block. In operation 712, the clean-up service builds a list of array identifiers in the block. The list may be a hash table, such as HashMap, or another such data structure. The hash table may be stored in the RAM of the clean-up service.

If one of the arrays in the block solution has not already been received by the node, then in one implementation, the array is requested from the other node. When the array is provided, other services in the node may carry out functions related to storing the array, but the clean-up service may be configured to simply add the transaction identifiers of the new array directly into the hash table.

In operation 714, once the hash table is built, then the clean-up service queries the candidate datastore using the array identifiers in the hash table. For each transaction identifier in the candidate datastore that is marked with that array identifier, *e.g.* "in_{*array*_*ID*}", the clean-up service then also marks that transaction identifier as "in_tip_{*i*}", where i is an index indicating the announced block. As explained above, the index is used to distinguish between blocks in the case where there are multiple possible solved blocks at the same level/height of the blockchain being evaluated and validated. In the case where there are individual transaction identifiers in the hash table, then the clean-up service searches for a matching identifier in the candidate datastore and marks it as "in_tip_{*i*}".

Operation 716 is carried out once the block has been accepted by the block validation service. That is, it is determined to be valid and is added to the blockchain. As noted above, such a block may be referenced as tip *j* in the discussion herein. In this case, the clean-up service then identifies all transaction identifiers in the candidate datastore that are not marked as "in_tip_{*j*}" and sends them to the block assembly service to enable the block assembly service to start building new arrays and a new candidate block. Any transactions labelled "in_tip_{j}" are deleted or removed from the candidate datastore. In some cases, all transactions are removed from the candidate datastore, and the ones sent to the block assembly service are only added back to the candidate datastore once they are put into the candidate block. In some other cases, the remaining transactions are left in the candidate datastore on the understanding that the block assembly service will imminently add them to the new candidate block being built. In that situation, the markings of those transactions as being in certain arrays may be removed.

In some examples, the clean-up service may be able to expose or provide access to the candidate datastore containing the remaining transactions so that the block assembly service may read them from the candidate datastore. In some cases, the remaining transactions may be sent to or otherwise provided to another service in the node, such as a mempool monitoring service and/or a double spend detection service.

Advantageously, this solution involves a much smaller RAM usage requirement because instead of loading millions of transaction identifiers into the hash table in memory for each array, a single array identifier is loaded into the hash table. If all arrays have been received, this may only involve about 600 array identifiers which can be stored in a few kilobytes.

The potential downside of this solution is that the remaining transaction identifiers that are not marked "in_tip_{*j*}" need to be communicated by the clean-up service from the candidate datastore to the block assembly service to enable the block assembly service to begin new candidate block construction. If this is a large number of transactions it could represent a significant communication overhead; however, because all the nodes on the network are working with a mostly-common set of transactions, it is expected that a block solution will tend to include most of the currently unconfirmed transactions, such that there will be relatively few transactions remaining in the candidate database that were not included in the block solution.

The above-described process involves marking transaction identifiers with array identifiers so that the clean-up service can quickly identify the confirmed transactions in a solved block based on the array identifiers that make up the block. In this manner, rather loading all the transaction identifiers from a solved block into a hash table and searching for matches within the candidate datastore, the clean-up service only need to load array identifiers into the hash table and to search for transaction identifiers in the candidate datastore that are already marked as being associated with or contained those array identifiers.

It may be possible to further improve the speed and reduce the RAM footprint for the most likely cases. In many situations, the solved block with include a set of all array identifiers that the successful node has previously announced to the network. The other nodes will all have seen and stored those previously-announced arrays. To the extent that a node is able to identify the node that is sending particular arrays, it can also tag or mark transaction identifiers contained in that array as being within an array "from that node". In other words, if an array from a particular node contains a transaction identifier, the matching transaction identifier in the candidate datastore is marked as "in _{*array*_*ID*}" using the array identifier and it is further marked as "received_from_{*node*_*ID*}" using a node identifier. The node identifier may be a unique identifier for that node, such as a registered miner identifier, a domain name, an IP address, etc.

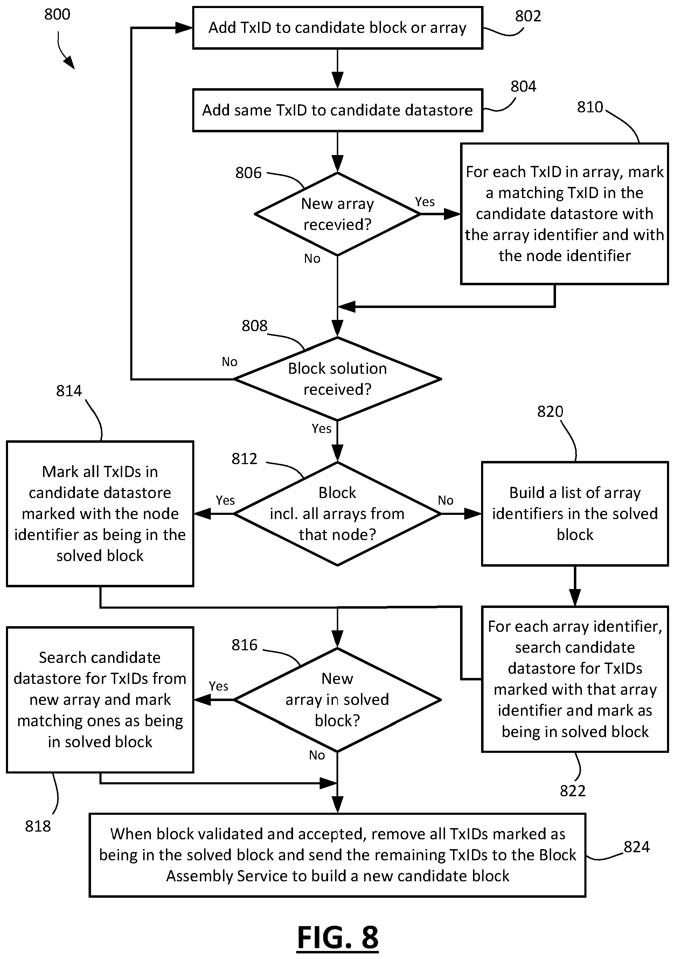

Reference is now made to Figure 8, which shows, in flowchart form, a further example method 800 for cleaning-up transactions after a block solution is announced.

The clean-up service builds the candidate datastore in which it stores the transaction identifiers of all transactions in the candidate block. As indicated in operations 802 and 804, whenever new transactions are added to the candidate block, the transaction identifiers are also added to the candidate datastore. Specifically, operation 802 indicates that one or more transaction identifiers, *e.g.* an array of TxIDs, are added to the candidate block being constructed by the block assembly service. In operation 804, the clean-up service adds those same transaction identifiers to the candidate database. Operation 806 indicates an assessment of whether a new array has been received from another node on the network. If no block solution has been announced, as indicated by operation 808, then the node continues building the candidate block and building the candidate datastore in operations 802 and 804. It will be appreciated that even if a block solution has been announced, the node may continue to, in parallel, while evaluating the solution, build the candidate block and candidate datastore while it carries out the block validation operations and clean-up preparations.

When a new array is received from another node in operation 806, the clean-up service queries the candidate datastore for every transaction identifier in the array to look for a matching transaction identifier in the candidate datastore. Matching transaction identifiers in the candidate datastore are then marked as being associated with that array and marked as being associated with that node in operation 810. For example, the transaction identifier in the candidate datastore may be marked with "in_{*array*_*ID}",* where the *array*_*ID* is the array identifier for the array that was just received, and it may further be marked with "received_from_{*node*_*ID*}*",* where the *node_ID* is a unique node identifier for the node that propagated its array on the network.

In operation 808, the node may determine that a block announcement has been received from one of the other nodes. As noted previously, the block announcement may include, along with block header data, a list of array identifiers. The array identifiers tell all of the nodes which arrays of transaction identifiers make up the content of the block. In this case, the node knows that the block solution was received from a particular other node having a unique node identifier. The message communicating the block solution details may include the node identifier.

A common and likely situation is that the block solution from a particular node is based on all of the arrays that that particular node has already communicated. This may permit a quick clean-up operation. Accordingly, in operation 812, the node determines whether the block solution, which lists array identifiers included in the block, includes all of the arrays sent by that particular node. If none of the announced arrays are missing from the solution, then in operation 814 the clean-up service may query the candidate datastore for transaction identifiers marked with the node identifier, *i.e.* marked with "received_from*_node_ID"* using the node_ID of the particular node, and it then marks all of those transaction identifiers in the candidate datastore as "in_tip_{*i*}" to indicate that they are in the solved block designated with index *i*.

The node may assess, from the block solution, whether there are any additional arrays in the solution other than all of the arrays already seen from the particular node, as indicated by operation 816. If not, then the clean-up service does not need to take further action to mark transaction identifiers because all of the included transaction identifiers will now be marked in the candidate datastore as "in_tip_{*i*}".

If there is an additional array included that has not previously been received by the node, then the node may request and receive details of the array contents, *i.e.* the ordered list of transaction identifiers included in the array. It may then, in operation 818, create a hash table in RAM, load the transaction identifiers from the new array, and carry out the operation of querying the candidate datastore for matching transaction identifiers. Any matching identifiers are marked as "in_tip_{*i*}", just as in the method 600 and method 700 described above.

The foregoing operations are based on the solved block from the other node containing all of the arrays that the other node had previously announced on the network. However, if in operation 812, the node determines that the block solution omits one of the previously-announced arrays from the solved block, then it cannot simply mark all transaction identifiers from that other node as being included in the block. In this situation, where one or more of the arrays is excluded from the block solution, the method 800 reverts to the process described in connection with Figure 7. That is, in operation 820 it builds a list of array identifiers in the solved block. The list may be a hash table, such as HashMap, or another such data structure. The hash table may be stored in the RAM of the clean-up service.

In operation 822, once the hash table is built, then the clean-up service queries the candidate datastore using the array identifiers in the hash table. For each transaction identifier in the candidate datastore that is marked with that array identifier, *e.g.* "in_{*array*_*ID}",* the clean-up service then also marks that transaction identifier as "in_tip_{*i*}", where *i* is an index indicating the announced block. As indicated with operations 816 and 818, the clean-up service may also determine if a new array is included in the block that was not previously received and, if so, it may add those transaction identifiers to the hash table and mark corresponding transaction identifiers in the candidate datastores as "in_tip_{*i*}".

Irrespective of whether the clean-up service was able to rely on the node identifier or not, operation 824 is carried out once the block has been accepted by the blockchain service, meaning the block has been determined to be valid and is added to the blockchain. As noted above, such a block may be referenced as tip *j*. In this case, the clean-up service then identifies all transaction identifiers in the candidate datastore that are not marked as "in_tip_{*j*}" and sends them to the block assembly service to enable the block assembly service to start building new arrays and a new candidate block. Any transactions labelled "in_tip_{j}" are deleted or removed from the candidate datastore. In some cases, all transactions are removed from the candidate datastore, and the ones sent to the block assembly service are only added back to the candidate datastore once they are put into the candidate block. In some other cases, the remaining transactions are left in the candidate datastore on the understanding that the block assembly service will imminently add them to the new candidate block being built. In that situation, the markings of those transactions as being in certain arrays may be removed.

In one alternative implementation, to reduce the load on the candidate datastore, the clean-up service may set up a candidate datastore for each other node in the network. That is, the candidate datastore is replicated as many times as there are nodes in the network. It will be appreciated that this involves a larger data storage consumption since the same datastore is replicate for each of the other nodes. Each time new transaction identifiers are added to the candidate block all of the candidate datastores need to be updated to add those same transaction identifiers; however, when an array is received from a particular node, only the candidate datastore for that node is updated to mark matching transaction identifiers with the array identifier. Moreover, there is no need to mark those transaction identifiers as being associated with the particular node since all marked transaction identifiers in that datastore are associated with the particular node.

Many of the above-described methods may be implemented using one or more computing devices each having one or more processing units, memory, and communications subsystems. Suitable software stored in memory and executable by the one or more processing units may configure the processing units to carry out the described functions or operations. In some cases, a microservices architecture may be used to implement some or all of the methods. While the operations described above are set out in a linear format, it will be appreciated that some implementations may at least partly parallelize some of the operations and/or carry them out in a different order without materially impacting operation of the methods.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A computer-implemented method of processing blockchain transactions by a node, the method comprising:
during a mining phase,
building (708) a candidate datastore containing a transaction identifier for each validated transaction in a candidate block;
receiving (708), from another node, two or more arrays, each array containing a respective set of transaction identifiers;
identifying (712) transaction identifiers in the candidate datastore that match transaction identifiers in one of the two or more arrays and recording, for each matching transaction identifier in the candidate datastore, an array identifier of said one of the two or more arrays;
during a block validation phase, after receiving (808) a block solution from said another node where the block solution identifies a plurality of arrays,
identifying (812) each transaction identifier in the candidate datastore having a recorded array identifier that matches one of the arrays in the plurality of arrays and marking that transaction identifier as being in the block solution; and
after the block solution is validated, identifying (818) all transactions identifiers in the candidate datastore not marked as being in the block solution and making those transaction identifiers available to another service in the node.

2. The method of claim 1, wherein identifying each transaction identifier in the candidate datastore having a recorded array identifier that matches one of the arrays in the plurality of arrays includes building a list of array identifiers from the block solution in memory.

3. The method of claim 2, wherein building the list of array identifiers includes building a hash table populated by the array identifiers from the block solution.

4. The method of claim 3, wherein marking that transaction identifier as being in the block solution includes, for each array identifier in the hash table, searching the candidate datastore to identify transaction identifiers that are marked with that array identifier and marking those transaction identifiers as being in the block solution.

5. The method of any one of claims 1 to 4, wherein marking transaction identifiers as being in the block solution includes marking the transaction identifiers as in tip *i,* where *i* is an index to the block solution among a plurality of announced block solutions.

6. The method of any one of claims 1 to 5, wherein identifying all transaction identifiers in the candidate datastore not marked as being in the block solution includes deleting from the candidate datastore all transaction identifiers marked as being in the block solution.

7. The method of claim 6, wherein making those transaction identifiers available includes copying and sending all remaining transaction identifiers from the candidate datastore to the another service.

8. The method of any one of claims 1 to 7, wherein the block solution includes a new array not previously-received from the another node and the method further includes:
obtaining a set of transaction identifiers included in the new array and loading them into memory; and
querying the candidate datastore for a match to each transaction identifier in the set and, if the match is found, marking that transaction identifier in candidate datastore as being in the block solution.

9. The method of claim 8, wherein a new array not previously-received is an array not received during the mining phase.

10. The method of any one of claims 1 to 9, further comprising building the candidate block containing the validated transactions while building the candidate datastore.

11. The method of any one of claims 1 to 10, wherein making those transaction identifiers available to another service includes forwarding those transaction identifiers to at least a block assembly service for building a new candidate block.

12. The method of any one of claims 1 to 10, wherein making those transaction identifiers available includes notifying the another service that the candidate database is available for access and that it contains all transactions identifiers not marked as being in the block solution.

13. The method of any one of claims 1 to 10, wherein the another service includes a mempool monitoring service or a double spend detection service.

14. A computing device, the computing device including:
one or more processors;
memory; and
computer-executable instructions stored in the memory that, when executed by the one or more processors, cause the processors to carry out the method claimed in any one of claims 1 to 13.

15. A computer-readable medium storing processor-executable instructions, the processor-executable instructions including instructions that, when executed by one or more processors, cause the processors to carry out the method claimed in any one of claims 1 to 14.

## Patentansprüche

1. Computerimplementiertes Verfahren zum Verarbeiten von Blockchain-Transaktionen durch einen Knoten, wobei das Verfahren Folgendes umfasst:
während einer Mining-Phase,
Erstellen (708) eines Kandidatendatenspeichers, der einen Transaktionsidentifikator für jede validierte Transaktion in einem Kandidatenblock enthält;
Empfangen (708), von einem anderen Knoten, von zwei oder mehr Arrays, wobei jedes Array einen jeweiligen Satz von Transaktionsidentifikatoren enthält;
Identifizieren (712) von Transaktionsidentifikatoren in dem Kandidatendatendatenspeicher, die mit Transaktionsidentifikatoren in einem der zwei oder mehr Arrays übereinstimmen, und Aufzeichnen, für jeden übereinstimmenden Transaktionsidentifikator in dem Kandidatendatenspeicher, eines Arrayidentifikators des einen der zwei oder mehr Arrays;
während einer Blockvalidierungsphase, nach dem Empfangen (808) einer Blocklösung von dem anderen Knoten, wo die Blocklösung eine Mehrzahl von Arrays identifiziert, Identifizieren (812) jedes Transaktionsidentifikators in dem Kandidatendatendatenspeicher mit einem aufgezeichneten Arrayidentifikator, der mit einem der Arrays in der Mehrzahl von Arrays übereinstimmt, und Markieren dieses Transaktionsidentifikators als in der Blocklösung befindlich; und
nachdem die Blocklösung validiert wurde, Identifizieren (818) aller Transaktionsidentifikatoren in dem Kandidatendatendatenspeicher, die nicht als in der Blocklösung befindlich markiert sind, und Bereitstellen dieser Transaktionsidentifikatoren für einen anderen Dienst in dem Knoten.

2. Verfahren nach Anspruch 1, wobei das Identifizieren jedes Transaktionsidentifikators in dem Kandidatendatendatenspeicher mit einem aufgezeichneten Arrayidentifikator, der mit einem der Arrays in der Mehrzahl von Arrays übereinstimmt, das Erstellen einer Liste von Arrayidentifikatoren aus der Blocklösung im Speicher beinhaltet.

3. Verfahren nach Anspruch 2, wobei das Erstellen der Liste von Arrayidentifikatoren das Erstellen einer Hash-Tabelle beinhaltet, die durch die Arrayidentifikatoren aus der Blocklösung gefüllt wird.

4. Verfahren nach Anspruch 3, wobei das Markieren dieses Transaktionsidentifikators als in der Blocklösung befindlich das Durchsuchen des Kandidatendatendatenspeichers für jeden Arrayidentifikator in der Hash-Tabelle beinhaltet, um Transaktionsidentifikatoren zu identifizieren, die mit diesem Arrayidentifikator markiert sind, und Markieren dieser Transaktionsidentifikatoren als in der Blocklösung befindlich.

5. Verfahren nach einem der Ansprüche 1 bis 4, wobei das Markieren von Transaktionsidentifikatoren als in der Blocklösung befindlich das Markieren der Transaktionsidentifikatoren wie in Tipp *i* beinhaltet, wobei *i* ein Index für die Blocklösung unter mehreren angekündigten Blocklösungen ist.

6. Verfahren nach einem der Ansprüche 1 bis 5, wobei das Identifizieren aller Transaktionsidentifikatoren in dem Kandidatendatendatenspeicher, die nicht als in der Blocklösung befindlich markiert sind, das Löschen aller Transaktionsidentifikatoren, die als in der Blocklösung befindlich markiert sind, aus dem Kandidatendatendatenspeicher beinhaltet.

7. Verfahren nach Anspruch 6, wobei das Verfügbarmachen dieser Transaktionsidentifikatoren das Kopieren und Senden aller verbleibenden Transaktionsidentifikatoren aus dem Kandidatendatendatenspeicher an den anderen Dienst beinhaltet.

8. Verfahren nach einem der Ansprüche 1 bis 7, wobei die Blocklösung ein neues Array beinhaltet, das zuvor nicht von dem anderen Knoten empfangen wurde, und das Verfahren ferner Folgendes beinhaltet:
Erhalten eines Satzes von Transaktionsidentifikatoren, die in dem neuen Array beinhaltet sind, und Laden dieser in den Speicher; und
Abfragen des Kandidatendatendatenspeichers nach einer Übereinstimmung mit jedem Transaktionsidentifikator in dem Satz und, falls die Übereinstimmung gefunden wird, Markieren dieses Transaktionsidentifikators in dem Kandidatendatenspeicher als in der Blocklösung befindlich.

9. Verfahren nach Anspruch 8, wobei ein neues Array, das nicht zuvor empfangen wurde, ein Array ist, das während der Mining-Phase nicht empfangen wurde.

10. Verfahren nach einem der Ansprüche 1 bis 9, das ferner das Erstellen des Kandidatenblocks, der die validierten Transaktionen enthält, während des Erstellens des Kandidatendatenspeichers umfasst.

11. Verfahren nach einem der Ansprüche 1 bis 10, wobei das Verfügbarmachen dieser Transaktionsidentifikatoren für einen anderen Dienst das Weiterleiten dieser Transaktionsidentifikatoren an mindestens einen Blockzusammenstellungsdienst zum Erstellen eines neuen Kandidatenblocks beinhaltet.

12. Verfahren nach einem der Ansprüche 1 bis 10, wobei das Verfügbarmachen dieser Transaktionsidentifikatoren das Benachrichtigen des anderen Dienstes beinhaltet, dass die Kandidatendatenbank für den Zugriff verfügbar ist und dass sie alle Transaktionsidentifikatoren enthält, die nicht als in der Blocklösung befindlich markiert sind.

13. Verfahren nach einem der Ansprüche 1 bis 10, wobei der andere Dienst einen Mempool-Überwachungsdienst oder einen Doppelausgabe-Detektionsdienst beinhaltet.

14. Rechenvorrichtung, wobei die Rechenvorrichtung Folgendes beinhaltet:
einen oder mehrere Prozessoren;
einen Speicher; und
computerausführbare Anweisungen, die in dem Speicher gespeichert sind, die, wenn sie durch den einen oder mehrere Prozessoren ausgeführt werden, die Prozessoren veranlassen, das Verfahren nach einem der Ansprüche 1 bis 13 durchzuführen.

15. Computerlesbares Medium, das prozessorausführbare Anweisungen speichert, wobei die prozessorausführbaren Anweisungen Anweisungen beinhalten, die, wenn sie durch einen oder mehrere Prozessoren ausgeführt werden, die Prozessoren veranlassen, das Verfahren nach einem der Ansprüche 1 bis 14 durchzuführen.

## Revendications

1. Procédé mis en œuvre par ordinateur de traitement de transactions de blockchain par un nœud, le procédé comprenant les étapes suivantes :
au cours d'une phase de minage,
construire (708) un magasin de données candidat contenant un identifiant de transaction pour chaque transaction validée dans un bloc candidat ;
recevoir (708), en provenance d'un autre nœud, deux tableaux ou plus, chaque tableau contenant un ensemble respectif d'identifiants de transactions ;
identifier (712) des identifiants de transaction dans le magasin de données candidat qui correspondent à des identifiants de transaction dans l'un des deux tableaux, ou plus, et enregistrer, pour chaque identifiant de transaction correspondant dans le magasin de données candidat, un identifiant de tableau dudit un des deux tableaux, ou plus ;
au cours d'une phase de validation de blocs, après réception (808) d'une solution de bloc provenant dudit autre nœud, où la solution de bloc identifie une pluralité de tableaux, identifier (812) chaque identifiant de transaction dans le magasin de données candidat ayant un identifiant de tableau enregistré qui correspond à l'un des tableaux dans la pluralité de tableaux, et marquer cet identifiant de transaction comme étant dans la solution de bloc ; et
après validation de la solution de bloc, identifier (818) tous les identifiants de transactions dans le magasin de données candidat non marqués comme étant dans la solution de bloc, et mettre ces identifiants de transactions à disposition d'un autre service dans le nœud.

2. Procédé selon la revendication 1, dans lequel l'identification de chaque identifiant de transaction dans le magasin de données candidat ayant un identifiant de tableau enregistré qui correspond à l'un des tableaux dans la pluralité de tableaux comprend la construction d'une liste d'identifiants de tableaux à partir de la solution de bloc en mémoire.

3. Procédé selon la revendication 2, dans lequel la construction de la liste d'identifiants de tableaux comprend la construction d'une table de hachage remplie par les identifiants de tableaux à partir de la solution de bloc.

4. Procédé selon la revendication 3, dans lequel le marquage de cet identifiant de transaction comme étant dans la solution de bloc comprend, pour chaque identifiant de tableau dans la table de hachage, de rechercher dans le magasin de données candidat pour identifier des identifiants de transactions qui sont marqués avec cet identifiant de tableau et de marquer ces identifiants de transactions comme étant dans la solution de bloc.

5. Procédé selon l'une quelconque des revendications 1 à 4, dans lequel le marquage des identifiants de transaction comme étant dans la solution de bloc comprend de marquer les identifiants de transactions comme dans la pointe i, où i est un index de la solution de bloc parmi une pluralité de solutions de blocs annoncées.

6. Procédé selon l'une quelconque des revendications 1 à 5, dans lequel l'identification de tous les identifiants de transactions dans le magasin de données candidate non marqués comme étant dans la solution de bloc comprend la suppression, dans le magasin de données candidat, de tous les identifiants de transactions marqués comme étant dans la solution de bloc.

7. Procédé selon la revendication 6, dans lequel la mise à disposition de ces identifiants de transactions comprend de copier et d'envoyer tous les identifiants de transactions restants du magasin de données candidat à l'autre service.

8. Procédé selon l'une quelconque des revendications 1 à 7, dans lequel la solution de bloc comprend un nouveau tableau non reçu précédemment de l'autre nœud, et le procédé comprend en outre les étapes suivantes :
obtenir un ensemble d'identifiants de transactions compris dans le nouveau tableau et les charger en mémoire ; et
interroger le magasin de données candidat quant à une correspondance avec chaque identifiant de transaction dans l'ensemble et, si la correspondance est trouvée, marquer cet identifiant de transaction dans le magasin de données candidat comme étant dans la solution de bloc.

9. Procédé selon la revendication 8, dans lequel un nouveau tableau non reçu précédemment est un tableau non reçu pendant la phase de minage.

10. Procédé selon l'une quelconque des revendications 1 à 9, comprenant en outre de construire le bloc candidat contenant les transactions validées tout en construisant le magasin de données candidat.

11. Procédé selon l'une quelconque des revendications 1 à 10, dans lequel la mise à disposition de ces identifiants de transactions pour un autre service comprend d'envoyer ces identifiants de transactions à au moins un service d'assemblage de blocs pour construire un nouveau bloc candidat.

12. Procédé selon l'une quelconque des revendications 1 à 10, dans lequel la mise à disposition de ces identifiants de transaction comprend de notifier à l'autre service que la base de données candidate est disponible pour l'accès et qu'elle contient tous les identifiants de transactions non marqués comme étant inclus dans la solution de bloc.

13. Procédé selon l'une quelconque des revendications 1 à 10, dans lequel l'autre service comprend un service de surveillance du mempool ou un service de détection de doubles dépenses.

14. Dispositif informatique, le dispositif informatique comportant :
un ou plusieurs processeurs ;
une mémoire ; et
des instructions exécutables par ordinateur stockées dans la mémoire qui, lorsqu'elles sont exécutées par les un ou plusieurs processeurs, amènent les processeurs à exécuter le procédé revendiqué dans l'une quelconque des revendications 1 à 13.

15. Support lisible par ordinateur stockant des instructions exécutables par un processeur, les instructions exécutables par un processeur comprenant des instructions qui, lorsqu'elles sont exécutées par un ou plusieurs processeurs, amènent les processeurs à mettre en oeuvre le procédé selon l'une quelconque des revendications 1 à 14.
